# EUROPEAN PATENT SPECIFICATION

(11) **EP 2 669 554 B1**
(45) Date of publication and mention of the grant of the patent: **03.06.2015**
(21) Application number: 13165876.7
(22) Date of filing: 30.04.2013
(51) Int. Cl.: F16J 15/32

(54) **Seal and method of forming a seal**
Dichtung und Verfahren zur Herstellung einer Dichtung
Joint d'étanchéité et procédé de formation d'un tel joint

(30) Priority: 28.05.2012 GB 201209389
(43) Date of publication of application: 04.12.2013
(73) Proprietor: Rolls-Royce plc, London SW1E 6AT (GB)
(72) Inventor: Jahn, Ingo Henry Johannes, West End, Queensland 4101 (AU); Franceschini, Gervas, Derby, DE23 1XP (GB)
(74) Representative: Hartley, Andrew Colin

(56) References cited:
- EP-A2- 2 221 514
- WO-A1-99/06673
- US-A1- 2009 315 272

## Description

### Field of the Invention

The present invention relates to a seal and a method of forming a seal.

### Background of the Invention

Leaf seals and brush seals may be used to form a seal between two relatively rotating components in order to maintain a relatively high pressure on one side of the seal and a relatively low pressure on the other. Such a seal is arranged with a large number of elongate flexible members (typically rectangular leaves in the case of leaf seals and bristles in the case of brush seals) which are held at a defined angle to the radial all the way round the seal circumference. The flexible members give the seal a low stiffness, and are packed together such that the total leakage through the seal is reduced. Nonetheless, interleaf or interbristle gaps do provide the seal with a porous aerodynamic working section. Such seals may be used, for example, in gas turbine engines (see e.g. WO-A- 99/06673).

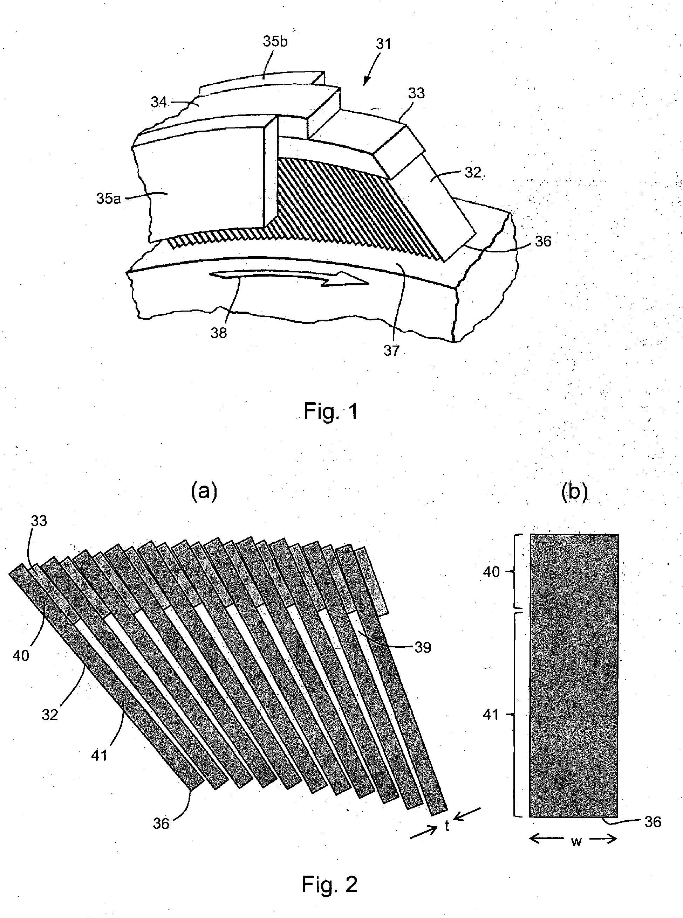

Figure 1 shows schematically a cut-away perspective view of a portion of a leaf seal 31 comprising a pack of leaves 32. Figure 2 shows (a) a view along the axial direction of an arc segment of the pack to better show some of the leaves 32 edge-on, and (b) a plan view of a single leaf 32.

The leaves 32 each have a root portion 40 and a working portion 41, and have a width w in the axial direction and a thickness t. The leaves alternate with spacer elements 33 at their root portions 40, and are secured thereat to a backing ring 34 of a leaf pack holder, which typically also comprises front 35a (high pressure side) and rear (low pressure side) 35b rigid coverplates. The working portions 41 of the leaves 32 present end edges 36 towards a surface 37 of a rotating component generally rotating in the direction depicted by arrowhead 38. The leaves 32, and in particular the end edges 36 of the leaves 32, act against the surface 37 in order to create a seal across the assembly 31. Each leaf 32 is sufficiently compliant in order to adjust with rotation of the surface 37, so that a good sealing effect is created. Thus, the wiping contact between the end edges 36 and the surface 37 is generally continuous, but may occasionally be interrupted. The spacers 33 ensure that flexibility is available to appropriately present the leaves 32 towards the surface 37 which, as illustrated, is generally with an inclined angle between them. The spacers 33 also help to form interleaf gaps 39 between adjacent working portions 41 of the leaves 32. A leakage flow through these gaps 39 is induced by the pressure differential across the seal.

Leaf seals can require tight tolerance control during manufacturing to achieve a target inner bore diameter at the end edges of the leaves. The inner bore diameter can be sensitive to manufacturing errors in the leaf and spacer thickness, and to errors in the lay angle of the leaves. If there is too high a variation between the manufactured bore diameter and the target diameter, then high scrap rates or unacceptably large variation in leakage rates through the seal can ensue. In addition, if the seal diameter has to be changed, then a completely new leaf and seal design may be required.

A brush seal has a pack of resilient bristles instead of a pack of leaves. The bristles may be randomly packed in the pack or more regularly arranged e.g. in circumferential rows. The bristles may be welded together at their root ends and secured thereat to a backing ring in a similar manner to the leaf pack. Like the end edges of the leaves, the end tips of the bristles distal from the root ends make wiping contact with the rotating component. Problems similar to those discussed above in respect of leaf seals can also affect brush seals.

### Summary of the Invention

An aim of the present invention is to provide an improved seal and an improved method of forming a seal.

In a first aspect, the present invention provides a method of forming a seal for effecting a seal between two, coaxial, relatively rotating components, the seal having an annular pack of elongate flexible members, the pack being mountable to a first one of the components at root portions of the flexible members and extending towards the other component such that end portions of the flexible members are presented for wiping contact with the other component, the method including the steps of:
(i) forming a plurality of pack segments, wherein each segment contains a respective subset of the flexible members of the annular pack, and wherein the end portions of the flexible members of each subset, when viewed in the axial direction of the seal, lie on a straight line; and
(ii) assembling the pack segments in a substantially circular pack holder such that each pack segment forms a respective angular sector of the annular pack.

Forming the pack segments so that the end edges of the flexible members lie on a straight line can help to simplify the positioning of the flexible members and thereby reduce manufacturing errors. Further, the diameter of the seal at the end portions can be determined primarily by the number, and relative orientation and positions of the seal segments, rather than by the lay angles of individual flexible members. As there are fewer seal segments than flexible members, it can be easier to maintain tight tolerance control during assembly.

In the assembling step, the entire pack can be formed directly from individual pack segments, e.g. by assembling the pack segments into a circumferentially continuous pack holder. However, according to another assembly option, the pack holder can be divided into a plurality of arc sections. In a first assembly stage, respective pack segments can be assembled into each arc section. Then, in a second assembly stage, the arc sections carrying their pack segments can be joined together, e.g. in situ in the engine, to form the pack holder and the annular pack.

Indeed, a second aspect of the present invention provides a method of forming an arc section of a seal for effecting a seal between two, coaxial, relatively rotating components, the seal having an annular pack of elongate flexible members, the pack being mountable to a first one of the components at root portions of the flexible members and extending towards the other component such that end portions of the flexible members are presented for wiping contact with the other component, the method including the steps of:
(i) forming a plurality of pack segments, wherein each segment contains a respective subset of the flexible members of the annular pack, and wherein the end portions of the flexible members of each subset, when viewed in the axial direction of the seal, lie on a straight line; and
(ii) assembling the pack segments in an arc section of a substantially circular leaf pack holder such that each pack segment forms a respective angular sector of the annular pack.

The method of the first or second aspect may have any one or, to the extent that they are compatible, any combination of the following optional features.

The seal may be a leaf seal, the flexible members may be stacked leaves of the leaf seal, and the end portions may be end edges of the leaves. Alternatively, the seal may be a brush seal, the flexible members may be bristles of the brush seal, and the end portions may be end tips of the bristles.

As the end portions of the flexible members of each subset, when viewed in the axial direction of the seal, lie on a straight line, the root portions of the flexible members of each subset, when viewed in the axial direction of the seal, generally also lie on a straight line.

The pack segments may be assembled such that neighbouring pack segments impinge on each other to compress the flexible members of the annular pack together at their end portions. When the seal is a leaf seal, interleaf gaps are typically formed between adjacent leaves. The compression can then have an effect of reducing the flow areas of the interleaf gaps. As the compression may not be transmitted to all the leaves of each pack segment, and is typically greatest towards the ends of each segment, the flow areas of the interleaf gaps may decrease from the centre to the ends of each segment. When the seal is a brush seal, due to the generally much greater flexibility of bristles in the axial direction of the seal compared to the leaves of leaf seal, the compression can cause the pack to splay out in the axial direction where the neighbouring pack segments impinge. Thus in this case, the bristle density of each segment may be decreased from the centre to the ends of each segment to compensate for the compression. This can reduce or eliminate such splaying.

The pack segments may be assembled such that, when viewed in the axial direction of the seal, a respective wedge shaped gap is formed between the facing ends of each pair of neighbouring pack segments at the radius of the root portions.

The method may further include the step of: removing material from the end portions of the flexible members of each pack segment such that the end portions of the assembled segments, when viewed in the axial direction of the seal, lie on a circle.

For example, such a removing step can be performed between steps (i) and (ii). The material removal can be by grinding the end portions of each segment. Before such a grinding operation, the flexible members of each subset may be compressed together at their end portions to emulate impingement of neighbouring pack segments in the assembled annular pack.

Additionally or alternatively, however, the removing step can be performed after step (ii). In this case, the material removal can be by grinding the end portions of the assembled segments, and/or by wear of the end edges against the other component during running-in of the seal after its installation on the two components. In general, the option of material removal by running-in wear becomes more viable when there is a larger number of segments in the pack.

The pack segments and/or the pack holder, or arc section thereof, may have angle setting formations which determine the angular positions of the pack segments in the pack holder. For example, the angle setting formations can be provided by one or more tabs which extend from each segment and which mate with matching slots in the pack holder. In the case of a leaf seal, such tabs can conveniently extend from the root portions of selected leaves and/or from selected spacers (which are typically provided to space the root portions of the leaves). Another possibility, however, is for the angle setting formations to be provided by wedging spacers carried by the pack holder. When wedge shaped gaps are to be formed between the facing ends of respective pair of neighbouring pack segments at the radius of the root portions, such wedging spacers can determine the gaps.

In a third aspect, the present invention provides a seal for effecting a seal between two, coaxial, relatively rotating components, the seal having an annular pack of elongate flexible members, the pack being mountable to a first one of the components at root portions of the flexible members and extending towards the other component such that end portions of the flexible members are presented for wiping contact with the other component;
wherein the seal further has a substantially circular pack holder, and the annular pack of flexible members is formed by a plurality of pack segments, each segment containing a respective subset of the flexible members of the annular pack, and the segments being assembled in the pack holder such that each pack segment forms a respective angular sector of the annular pack; and
wherein the root portions of the flexible members of each subset, when viewed in the axial direction of the seal, lie on a straight line.

The seal of the third aspect can be formed by the method of the first or second aspect.

Thus, the pack segments may be assembled in the pack holder such that neighbouring pack segments impinge on each other to compress the flexible members of the annular pack together at their end portions. Indeed, in a fourth aspect, the present invention provides a seal for effecting a seal between two, coaxial, relatively rotating components, the seal having an annular pack of elongate flexible members, the pack being mountable to a first one of the components at root portions of the flexible members and extending towards the other component such that end portions of the flexible members are presented for wiping contact with the other component;
wherein the seal further has a substantially circular pack holder, and the annular pack of flexible members is formed by a plurality of pack segments, each segment containing a respective subset of the flexible members of the annular pack, and the segments being assembled in the pack holder such that each pack segment forms a respective angular sector of the annular pack; and
wherein the pack segments are assembled in the pack holder such that neighbouring pack segments impinge on each other to compress the flexible members of the annular pack together at their end portions.

The seal of the fourth aspect can also be formed by the method of the first or second aspect.

The seal of the third or fourth aspect may have any one or, to the extent that they are compatible, any combination of the following optional features.

The seal may be a leaf seal, the flexible members may be stacked leaves of the leaf seal, and the end portions may be end edges of the leaves. Alternatively, the seal may be a brush seal, the flexible members may be bristles of the brush seal, and the end portions may be end tips of the bristles.

When the seal is a leaf seal, interleaf gaps are typically formed between adjacent leaves. The compression can then have an effect of reducing the flow areas of the interleaf gaps. As the compression may not be transmitted to all the leaves of each pack segment, and is typically greatest towards the ends of each segment, the flow areas of the interleaf gaps may decrease from the centre to the ends of each segment. When the seal is a brush seal, the bristle density of each segment may decrease from the centre to the ends of each segment to compensate for the compression. This can reduce or eliminate any splaying of the pack in the axial direction of the seal which might otherwise occur.

The pack segments may be assembled in the pack holder such that, when viewed in the axial direction of the seal, a respective wedge shaped gap is formed between the facing ends of each pair of neighbouring pack segments at the radius of the root portions.

The pack segments and/or the pack holder can have angle setting formations which determine the angular positions of the pack segments in the pack holder. For example, the angle setting formations can be provided by one or more tabs which extend from each segment and which mate with matching slots in the pack holder. In the case of a leaf seal, such tabs can conveniently extend from the root portions of selected leaves and/or from selected spacers (which are typically provided to space the root portions of the leaves). Another possibility is for the angle setting formations to be provided by wedging spacers carried by the pack holder which determine wedge shaped gaps formed between the facing ends of respective pairs of neighbouring pack segments at the radius of the root portions.

The pack holder can be a circumferentially continuous item or can be formed from a plurality of arc sections.

Indeed, a fifth aspect of the invention provides an arc section of a seal according to the third or fourth aspect, the arc section carrying a subset of the pack segments of the seal and being adapted to join with other such arc sections to form the seal.

In a sixth aspect, the present invention provides a gas turbine engine having one or more seals according to the third or fourth aspect.

Further optional features of the invention will now be set out. These are applicable singly or in any combination with any aspect of the invention.

The components can be a rotor shaft and a casing for the shaft. Typically, the or each pack is mounted to the radially outer component.

The seal may further have a front coverplate at the high pressure side of the pack, the front coverplate covering a portion of the radial extent of the pack. The seal may further have a rear coverplate at the low pressure side of the pack, the rear coverplate covering a portion of the radial extent of the pack.

The seal can be used, for example, in gas and steam turbines, and jet engines. However, it may also be used in other applications, e.g. where sealing between a high and low pressure region is required along a shaft.

Further optional features of the invention are set out below.

### Brief Description of the Drawings

Embodiments of the invention will now be described by way of example with reference to the accompanying drawings in which:
Figure 1 shows schematically a cut-away perspective view of a portion of a leaf seal;
Figure 2 shows (a) a view along the axial direction of an arc segment of the pack of leaves of the seal of Figure 1, and (b) a plan view of a single leaf of the seal of Figure 1;
Figure 3 shows schematically a longitudinal section through a gas turbine engine;
Figure 4 shows schematically a view along the axial direction of a pack segment for a leaf seal;
Figure 5 shows schematically a view along the axial direction of three neighbouring pack segments of the type shown in Figure 4 in an assembled state;
Figure 6 shows schematically a view along the axial direction of a pre-compressed pack segment of the type shown in Figure 4 prior to grinding;
Figure 7 shows schematically grinding of the end edges of the pre-compressed pack segment of Figure 6;
Figure 8 shows schematically a view along the axial direction of three neighbouring ground pack segments in an assembled state;
Figure 9 shows schematically a view along the axial direction of a section of a front or a rear side retaining ring;
Figure 10 shows plan views of (a) a leaf with a normal spacer, and (b) a leaf with a special spacer which projects in the axial direction beyond the front or rear edge of the leaf;
Figure 11 shows schematically a view along the axial direction of three neighbouring pack segments assembled in the retaining ring of Figure 9;
Figure 12 shows schematically a view along the axial direction of a section of a further front or a rear side retaining ring;
Figure 13 shows schematically a view along the axial direction of three neighbouring pack segments assembled in the retaining ring of Figure 12;
Figure 14 shows schematically a view along the axial direction of a pack segment for a brush seal;
Figure 15 shows schematically a radially outward view onto the end tips of the pack segment of Figure 14;
Figure 16 shows schematically a radially outward view onto the end tips of two neighbouring pack segments of the type shown in Figure 14 after assembly into a pack holder;
Figure 17 shows schematically a radially outward view onto the end tips of a pack segment with a reduced bristle density at the ends of the segment;
Figure 18 shows schematically a cross-section through a brush seal pack segment in which the root portions of the bristles are held in a holder; and
Figure 19 shows schematically a view along the axial direction of a section of a front or a rear side retaining ring.

### Detailed Description and Further Optional Features of the Invention

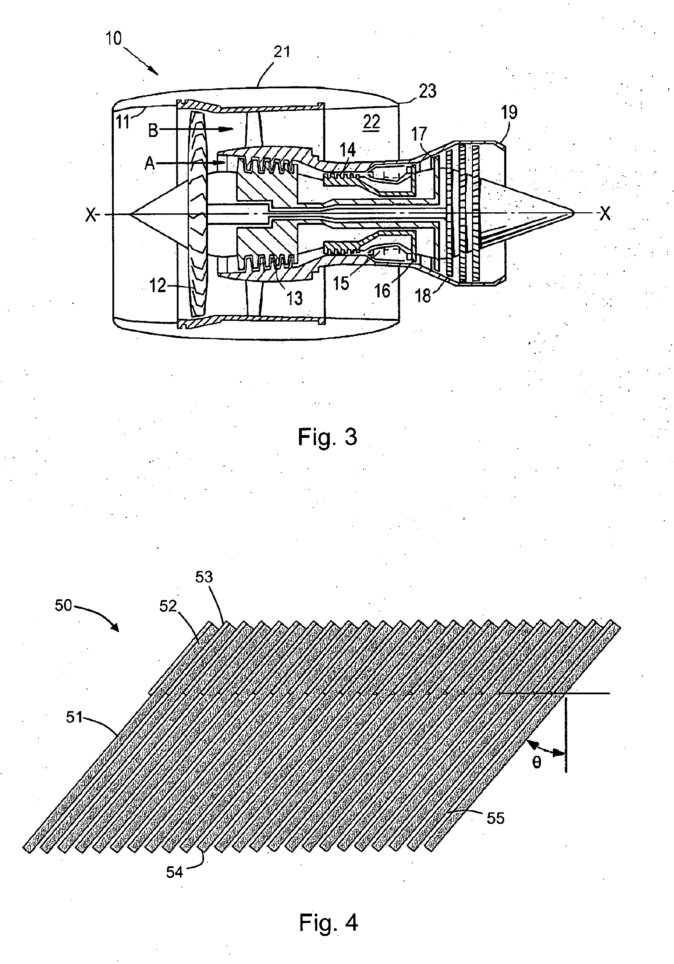

With reference to Figure 3, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The engine has one or more leaf seals installed, for example, between an interconnecting shaft and a casing for the shaft. Each leaf seal has an annular pack of stacked leaves and is mounted, for example, to the casing at root portions of the leaves and extends towards the shaft such that end edges of the leaves are presented for wiping contact with the shaft. Interleaf gaps are formed between adjacent leaves. The seal can be formed by assembling a plurality of straight pack segments into a circular pack holder.

Figure 4 shows schematically a view along the axial direction of such a pack segment 50. The segment 50 comprises a plurality of leaves 51 which alternate at their root portions 52 with spacers 53, and which extend from the root portions 52 to end edges 54. Interleaf gaps 55 are formed between the leaves 51.

The end edges 54 lie on a straight line, and as the leaves are of the same length and adopt the same angle of inclination θ, the root portions 52 also lie on a straight line.

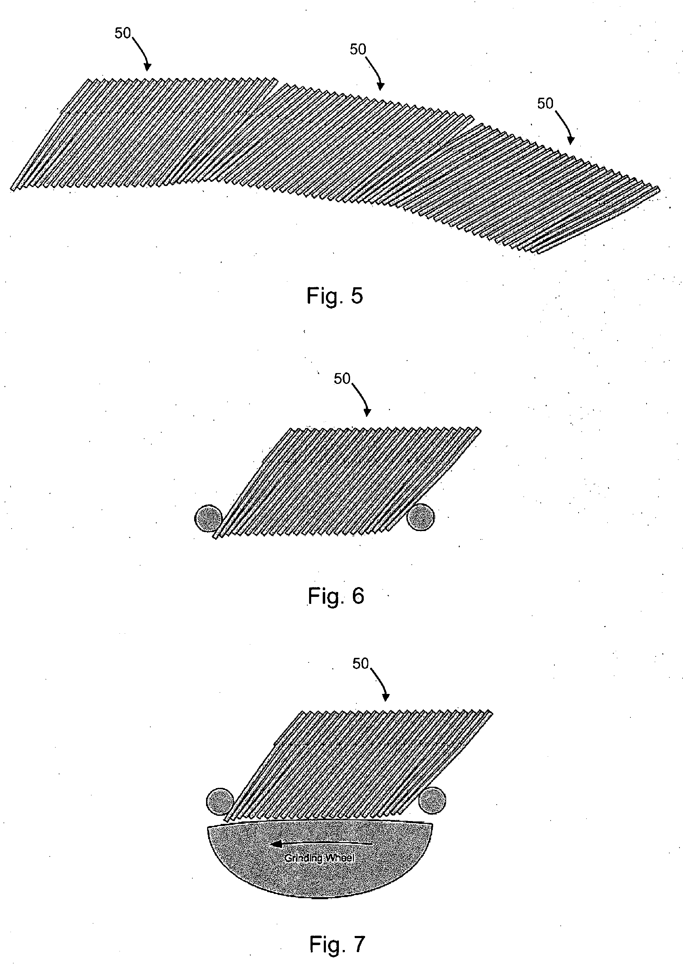

The pack segments 50 are assembled as straight sides of a polygon inside a generally circular pack holder. Three neighbouring pack segments 50 are shown in the assembled state in Figure 5. The segments impinge on each other to compress the leaves 51 together at their end edges 54, and thereby reduce the flow areas of the interleaf gaps 55. The compression is greatest at the ends of the segment so that the flow areas of the interleaf gaps decrease from the centre to the ends of the segments. As a result the polygon is slightly deformed at the end edges 54 while it remains straight-sided at the root portions 52.

The deformed polygon shape at the ends edges 54 may be acceptable for running in if there is a large number of segments (e.g. more than 20) and the initial interference can be easily worn away from the rubbing action of the rotor on the end edges (wear-to-fit). However, if a wearing in process is not desirable, or the number of segments is small such that an excessive amount of wear would be needed, then the segments can be pre-ground.

One option is to perform material removal on each pack segment 50 or group of segments before assembly into the holder. Each segment or group of segments can be pre-compressed as shown in Figure 6 to emulate the impingement of neighbouring pack segments in the assembled pack. A grinding wheel of the desired finished diameter (or slightly less than the desired finished diameter) can then be used to grind a circular arc on the segment, as shown in Figure 7.

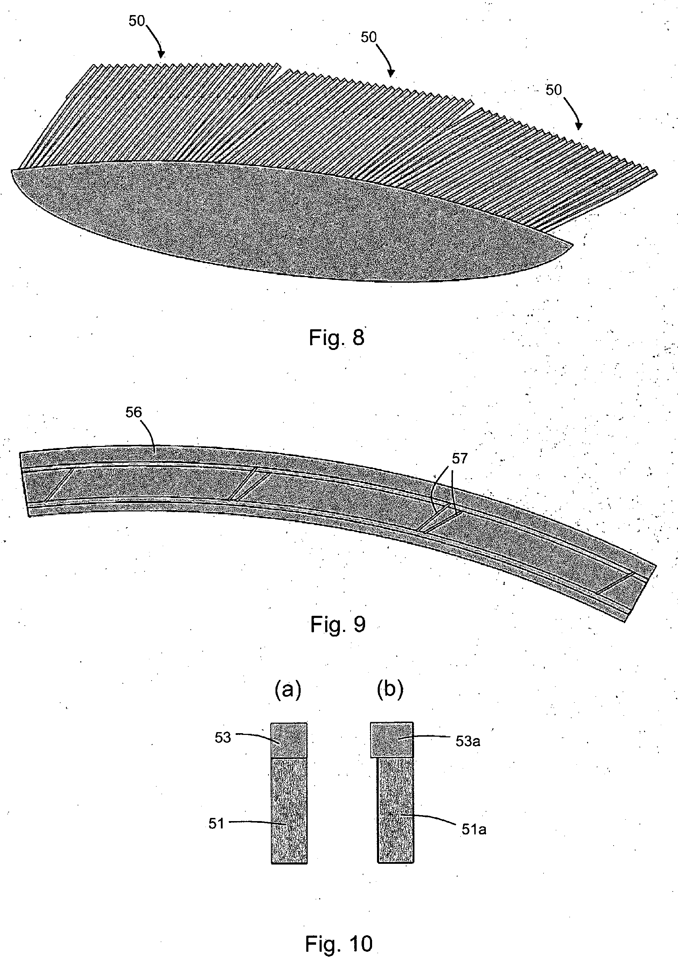

The ground segments 50 are assembled, and a further grinding process may be performed to grind the entire seal to allow for imperfections in the location of the assembled segments. If a further grinding process is used, then the first grinding process can be omitted or can be used to produce a diameter slightly smaller than the desired finished diameter. As shown in Figure 8, the finished segments 50 then sit on the desired rotor.

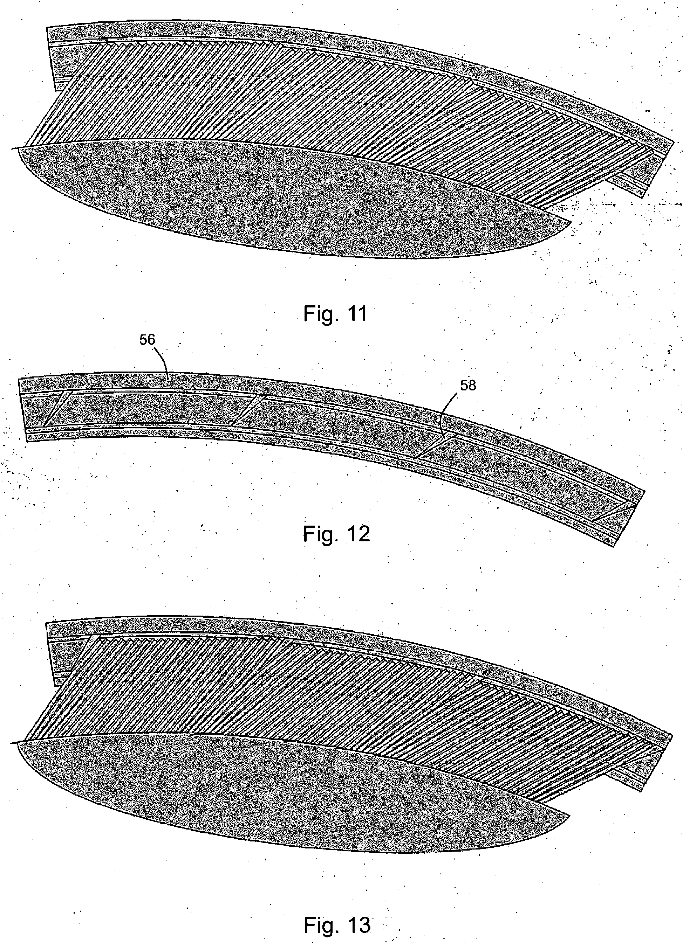

The pack segments 50 and/or the pack holder can have angle setting formations which determine the angular positions of the pack segments in the pack holder. For example, Figure 9 shows schematically a section of a front or a rear side retaining ring 56, which is part of the pack holder. Pairs of slots 57 machined into the retaining ring define a wedge shaped gap and demarcate the locations of the facing ends of neighbouring pack segments. The end leaves 51a of the pack segments have special spacers 53a, as shown in Figure 10(b), which project as tabs in the axial direction beyond the front or rear edge of the leaf to locate in a respective slot 57, and thereby determine the positions of the pack segments and ensure that the segments have the correct angles, as shown in Figure 11.

The special spacers 53a can be applied to other leaves, and not just the end leaves of the packs. The projecting tab of a special spacer can be the whole height of the spacer, or just a part of the height of the spacer. Alternatively or additionally to the special spacers, root portions 52 of selected leaves 51 may form similar projecting tabs.

Figure 12 shows schematically a section of another front or a rear side retaining ring 56. As an alternative to an angle setting formation based on slots and spacers, the ring has wedging spacers 58 which determine the wedge shaped gaps formed between the facing ends of pairs of neighbouring pack segments. Figure 13 shows schematically pack segments 50 located in the ring 56 of Figure 12.

In addition, the engine of Figure 3 has one or more brush seals also installed, for example, between an interconnecting shaft and a casing for the shaft. Each brush seal has an annular pack of bristles and is mounted, for example, to the casing at root ends of the bristles and extends towards the shaft such that end tips of the bristles are presented for wiping contact with the shaft. Like the leaf seal, the brush seal can be formed by assembling a plurality of straight pack segments into a circular pack holder.

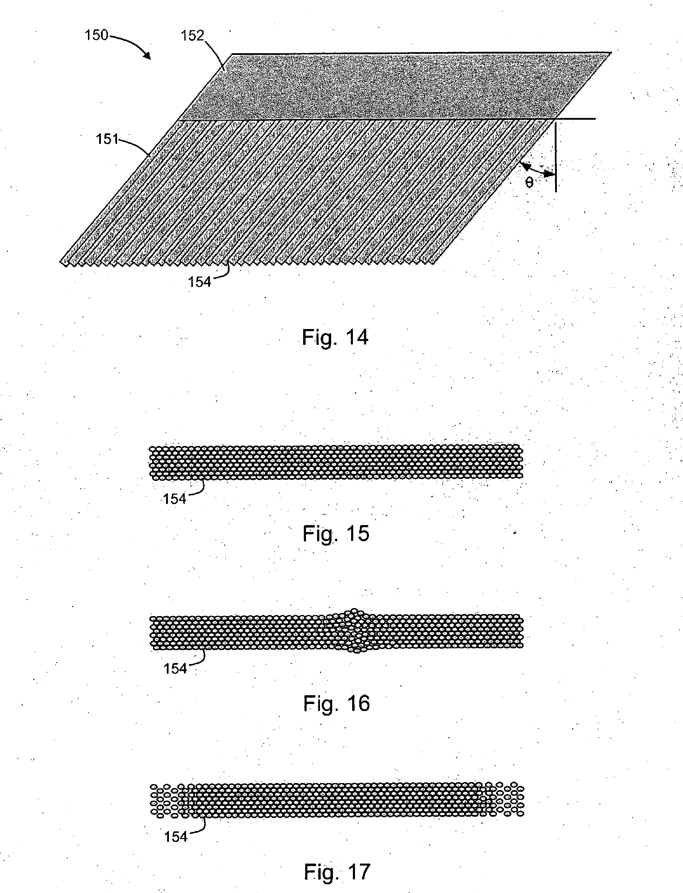

Figure 14 shows schematically a view along the axial direction of a pack segment 150 for the brush seal. The segment 150 comprises a plurality of bristles 151 which extend from root portions 152 to end tips 154. The end tips 154 lie on a straight line, and as the bristles are of the same length and adopt the same angle of inclination θ, the root portions 152 also lie on a straight line. The root portions can be welded together or mechanically fastened (e.g. crimped) to a holder at the root portions.

The bristles can be randomly packed, or packed in a more or less regular array. Figure 15 shows schematically a radially outward view onto the end tips 154 of the pack segment 150 of Figure 14. In this case, the bristles are arranged in eight rows.

The pack segments 150 are assembled as straight sides of a polygon inside a generally circular pack holder. Again, the segments impinge on each other to compress the bristles 151 together at their end tip 154. The compression is greatest at the ends of the segments. In particular, the bristles can splay outwards to increase the width of the seal in the axial direction, a shown schematically in Figure 16. To reduce or eliminate this splaying, the bristle density may decrease at the ends of the segments, as shown schematically in Figure 17.

Like the leaf seal, the deformed polygon shape at the end tips 154 of the assembled brush seal pack segments 150 may be acceptable for running in if there is a large number of segments and the initial interference can be easily worn away from the rubbing action of the rotor on the end tips. However, if this is not desirable, then the segments can be pre-ground, for example by pre-compressing each segment or group of segments and grinding the end tips (in a similar manner to the procedure described above in relation to Figures 6 and 7), and/or the end tips of the entire assembled seal can be ground.

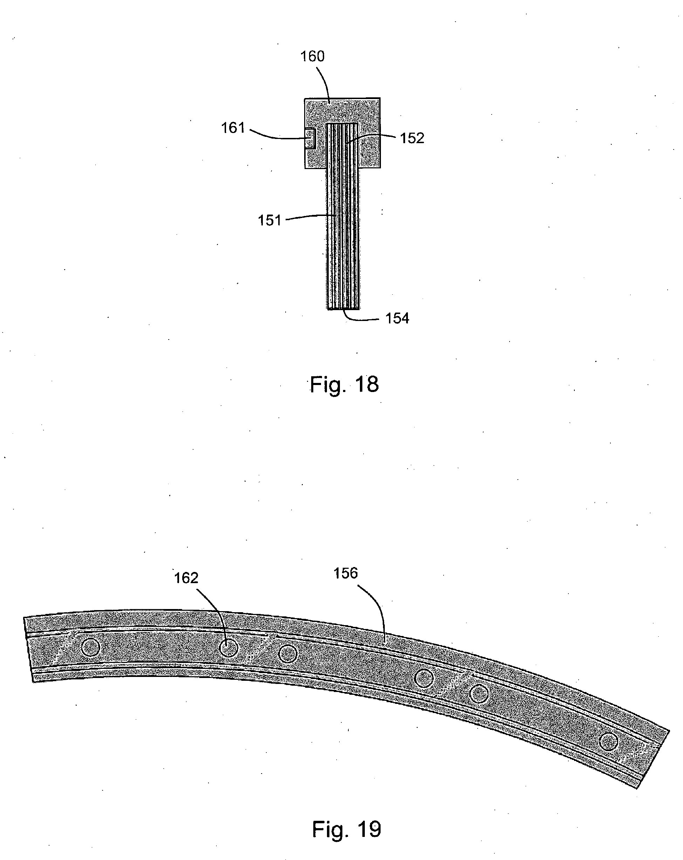

The pack segments 150 and/or the pack holder can have angle setting formations which determine the angular positions of the pack segments in the pack holder. In the case of brush seals, the tab and slot arrangement described above in relation to Figures 9 to 11 may not be appropriate. However, an option is to weld or crimp the bristles 151 at their root portions 15 to a holder 160, as shown schematically in Figure 18, which has a plurality of angle setting formations such as recesses 161. These formations engage with complementary formations, such as dowel pins 162, formed in a front or rear side retaining ring 156 of the pack holder, as shown schematically in Figure 19 to determine the angular positions of the pack segments.

The angular positions of the pack segments 150 can also be determined by wedging spacers provided by a retaining ring of the pack holder in a similar arrangement to that described above in relation to Figures 12 and 13.

Forming a leaf or bristle pack from segments using the approach explained above can simplify the manufacturing process and reduce variation in manufacturing errors. In particular, the dimensional accuracy of the seal can be determined primarily by the process used to remove material from the end edges/tips rather than by control of lay angles, and, in the case of leaf seals, by control of leaf and spacer thicknesses. A further advantage of the approach is that by varying the number of segments in the polygon, the seal diameter can be readily varied. Thus a single stacking arrangement can be used to form seals for a range of seal diameters. In addition, in some circumstances it may be possible to repair a seal by replacing one or more seal segments as an alternative to replacing the entire seal.

While the invention has been described in conjunction with the exemplary embodiments described above, many equivalent modifications and variations will be apparent to those skilled in the art when given this disclosure. For example, the pack holder can be divided into a plurality of arc sections. A plurality of pack segments 50, 150 can be assembled into each arc section, and the arc sections, carrying their pack segments, may then be joined together to form the finished seal. As another example, the leaves of a leaf seal can take shapes other than the rectangular shape shown in Figures 2 and 10, and can be of nonuniform thickness. Accordingly, the exemplary embodiments of the invention set forth above are considered to be illustrative and not limiting. Various changes to the described embodiments may be made without departing from scope of the claims.

## Claims

1. A method of forming a seal for effecting a seal between two, coaxial, relatively rotating components, the seal having an annular pack of elongate flexible members (51, 151), the pack being mountable to a first one of the components at root portions (52, 152) of the flexible members and extending towards the other component such that end portions (54, 154) of the flexible members are presented for wiping contact with the other component, the method including the steps of:
(i) forming a plurality of pack segments (50, 150), wherein each segment contains a respective subset of the flexible members of the annular pack, and wherein the end portions of the flexible members of each subset, when viewed in the axial direction of the seal, lie on a straight line; and
(ii) assembling the pack segments in a substantially circular pack holder such that each pack segment forms a respective angular sector of the annular pack.

2. A method of forming an arc section of a seal for effecting a seal between two, coaxial, relatively rotating components, the seal having an annular pack of elongate flexible members (51, 151), the pack being mountable to a first one of the components at root portions (52, 152) of the flexible members and extending towards the other component such that end portions (54, 154) of the flexible members are presented for wiping contact with the other component, the method including the steps of:
(i) forming a plurality of pack segments (50, 150), wherein each segment contains a respective subset of the stacked flexible members of the annular pack, and wherein the end portions of the stacked flexible members of each subset, when viewed in the axial direction of the seal, lie on a straight line; and
(ii) assembling the pack segments in an arc section of a substantially circular pack holder such that each pack segment forms a respective angular sector of the annular pack.

3. A method according to claim 1 or 2, wherein the pack segments are assembled such that neighbouring pack segments impinge on each other to compress the flexible members of the annular pack together at their end portions.

4. A method according to any one of the previous claims, wherein the pack segments are assembled such that, when viewed in the axial direction of the seal, a respective wedge shaped gap is formed between the facing ends of each pair of neighbouring pack segments at the radius of the root portions.

5. A method according to any one of the previous claims, further including the step of:
removing material from the end portions of the stacked flexible members of each pack segment such that the end portions of the assembled segments, when viewed in the axial direction of the seal, lie on a circle.

6. A method according to any one of the previous claims, wherein the seal is a leaf seal, the flexible members are stacked leaves (51) of the leaf seal, and the end portions are end edges (54) of the leaves.

7. A method according to any one of claims 1 to 5, wherein the seal is a brush seal, the flexible members are bristles (151) of the brush seal, and the end portions are end tips (154) of the bristles.

8. A seal for effecting a seal between two, coaxial, relatively rotating components, the seal having an annular pack of elongate flexible members (51, 151), the pack being mountable to a first one of the components at root portions (52, 152) of the flexible members and extending towards the other component such that end portions (54, 154) of the flexible members are presented for wiping contact with the other component;
wherein the seal further has a substantially circular pack holder, and the annular pack of flexible members is formed by a plurality of pack segments (50, 150), each segment containing a respective subset of the flexible members of the annular pack, and the segments being assembled in the pack holder such that each pack segment forms a respective angular sector of the annular pack; **characterised in that**
the root portions of the flexible members of each subset, when viewed in the axial direction of the seal, lie on a straight line.

9. A leaf seal according to claim 8, wherein the pack segments are assembled in the pack holder such that neighbouring pack segments impinge on each other to compress the flexible members of the annular pack together at their end portions.

10. A seal for effecting a seal between two, coaxial, relatively rotating components, the seal having an annular pack of elongate flexible members (51, 151), the pack being mountable to a first one of the components at root portions (52, 152) of the flexible members and extending towards the other component such that end portions (54, 154) of the flexible members are presented for wiping contact with the other component;
wherein the seal further has a substantially circular pack holder, and the annular pack of stacked flexible members is formed by a plurality of pack segments (56, 156), each segment containing a respective subset of the stacked flexible members of the annular pack, and the segments being assembled in the pack holder such that each pack segment forms a respective angular sector of the annular pack; **characterised in that** the end portion of the stacked flexible members of each subset, when viewed in the axial direction of the seal, lie on a straight line; and
wherein said pack segments are assembled in the pack holder such that neighbouring pack segments impinge on each other to compress the flexible members of the annular pack together at their end portions.

11. A seal according to any one of claims 8 to 10, wherein the pack segments are assembled in the pack holder such that, when viewed in the axial direction of the seal, a respective wedge shaped gap is formed between the facing ends of each pair of neighbouring pack segments at the radius of the root portions.

12. A seal according to any one of claims 8 to 11, wherein the pack segments and/or the pack holder have angle setting formations which determine the angular positions of the pack segments in the pack holder.

13. A seal according to any one of claims 8 to 12, wherein the seal is a leaf seal, the flexible members are stacked leaves (51) of the leaf seal, and the end portions are end edges (54) of the leaves.

14. A seal according to any one of claims 8 to 12, wherein the seal is a brush seal, the flexible members are bristles (151) of the brush seal, and the end portions are end tips (154) of the bristles.

15. An arc section of a seal according to any one of claims 8 to 14, the arc section carrying a subset of the pack segments of the seal and being adapted to join with other such arc sections to form the seal.

## Patentansprüche

1. Verfahren zur Bildung einer Dichtung zur Abdichtung zwischen zwei koaxialen, relativ rotierenden Komponenten, wobei die Dichtung über eine ringförmige Packung von verlängerten flexiblen Teilen (51, 151) verfügt und die Packung an einer ersten Komponente an den Fußabschnitten (52, 152) der flexiblen Teile angebracht wird und sich in Richtung der anderen Komponente erstreckt, sodass die Endabschnitte (54, 154) der flexiblen Teile einen wischenden Kontakt mit den anderen Komponenten darstellen, wobei das Verfahren folgende Schritte umfasst:
(i) Bildung einer Vielzahl von Packungssegmenten (50, 150), wobei jedes Segment eine bestimmte Teilmenge der flexiblen Teile der ringförmigen Packung umfasst und sich die Endabschnitte der flexiblen Teile einer jeden Teilmenge, bei einer Betrachtung der Dichtung aus axialer Richtung, auf einer geraden Linie befinden; und
(ii) Zusammensetzen der Packungssegmente in einem wesentlich zirkulären Paclcungshalter, sodass jedes Packungssegment einen jeweiligen Winkelsektor der ringförmigen Packung bildet.

2. Verfahren zur Bildung eines Bogenabschnitts einer Dichtung zur Abdichtung zwischen zwischen zwei, koaxialen, relativ rotierenden Komponenten, wobei die Dichtung über eine ringförmige Packung von verlängerten flexiblen Teilen (51, 151) verfügt und die Packung an einer ersten Komponente an den Fußabschnitten (52, 152) der flexiblen Teile angebracht wird und sich in Richtung der anderen Komponente erstreckt, sodass die Endabschnitte (54, 154) der flexiblen Teile einen wischenden Kontakt mit den anderen Komponenten darstellen, wobei das Verfahren folgende Schritte umfasst:
(i) Bildung einer Vielzahl von Packungssegmenten (50, 150), wobei jedes Segment eine bestimmte Teilmenge der gestapelten flexiblen Teile der ringförmigen Packung umfasst und sich die Endabschnitte der gestapelten flexiblen Teile einer jeden Teilmenge, bei einer Betrachtung der Dichtung aus axialer Richtung, auf einer geraden Linie befinden; und
(ii) Zusammensetzen der Packungssegmente in einem Bogenabschnitt eines wesentlich zirkulären Packungshalters, sodass jedes Packungssegment einen jeweiligen Winkelsektor der ringförmigen Packung bildet.

3. Verfahren nach Anspruch 1 oder 2, wobei die Packungssegmente so zusammengesetzt werden, dass benachbarte Packungssegmente aufeinander treffen, um die flexiblen Teile der ringförmigen Packung an den Endabschnitten zusammenzudrücken.

4. Verfahren nach einem der vorhergehenden Ansprüche, wobei die Packungssegmente so zusammengesetzt werden, dass sich bei einer Betrachtung der Dichtung aus axialer Richtung eine entsprechende keilförmige Lücke zwischen den sich zugewandten Enden von jedem Paar der sich benachbarten Packungssegmente im Radius der Endabschnitte bildet.

5. Verfahren nach einem der vorangegangenen Ansprüche, welches des Weiteren folgende Schritte umfasst:
Materialentfernung von den Endabschnitten der gestapelten flexiblen Teile eines jeden Packungssegments, sodass die Endabschnitte der zusammengesetzten Segmente bei einer Betrachtung der Dichtung aus axialer Richtung auf einem Kreis liegen.

6. Verfahren nach einem der vorangegangenen Ansprüche, wobei die Dichtung eine Blattdichtung ist, die flexiblen Teile gestapelte Blätter (51) sind und die Endabschnitte die Endkanten (54) der Blätter sind.

7. Verfahren nach einem der Ansprüche 1 bis 5, wobei die Dichtung eine Bürstendichtung ist, die flexiblen Teile Borsten (151) sind und die Endabschnitte die Endspitzen (154) der Borsten sind.

8. Dichtung zur Abdichtung zwischen zwei, koaxialen, relativ rotierenden Komponenten, wobei die Dichtung über eine ringförmige Packung mit verlängerten flexiblen Teilen (51, 151) verfügt und die Packung an einer ersten Komponente an den Fußabschnitten (52, 152) der flexiblen Teile angebracht wird und sich in Richtung der anderen Komponente erstreckt, sodass die Endabschnitte (54, 154) der flexiblen Teile einen wischenden Kontakt mit den anderen Komponenten darstellen;
wobei die Dichtung des Weiteren über einen wesentlich zirkulären Packungshalter verfügt und die zirkuläre Packung flexibler Teile durch eine Vielzahl von Packungssegmenten (50, 150) geformt wird, wobei jedes Segment eine bestimmte Teilmenge der flexiblen Teile der ringförmigen Packung umfasst und die Segmente im Packungshalter so zusammengesetzt werden, dass jedes Packungssegment einen jeweiligen Winkelsektor der ringförmigen Packung bildet, **dadurch gekennzeichnet, dass**
sich die Fußabschnitte der flexiblen Teile von jeder Teilmenge, bei einer Betrachtung der Dichtung aus axialer Richtung, auf einer geraden Linie befinden.

9. Blattdichtung nach Anspruch 8, wobei die Packungssegmente so zusammengesetzt werden, dass benachbarte Packungssegmente aufeinander treffen, um die flexiblen Teile der ringförmigen Packung an den Endabschnitten zusammenzudrücken.

10. Dichtung zur Abdichtung zwischen zwei, koaxialen, relativ rotierenden Komponenten, wobei die Dichtung über eine ringförmige Packung mit verlängerten flexiblen Teilen (51, 151) verfügt und die Packung an einer ersten Komponente an den Fußabschnitten (52, 152) der flexiblen Teile angebracht wird und sich in Richtung der anderen Komponente erstreckt, sodass die Endabschnitte (54, 154) der flexiblen Teile einen wischenden Kontakt mit den anderen Komponenten darstellen;
wobei die Dichtung des Weiteren über einen wesentlich zirkulären Packungshalter verfügt und die zirkuläre Packung gestapelter flexibler Teile durch eine Vielzahl von Packungssegmenten (56, 156) geformt wird, jedes Segment eine bestimmte Teilmenge der gestapelten flexiblen Teile der ringförmigen Packung umfasst und die Segmente im Packungshalter so zusammengesetzt werden, dass jedes Packungssegment einen jeweiligen Winkelsektor der ringförmigen Packung bildet, **dadurch gekennzeichnet, dass**
sich die Endabschnitte der gestapelten flexiblen Teile von jeder Teilmenge, bei einer Betrachtung der Dichtung aus axialer Richtung, auf einer geraden Linie befinden, und
besagte Packungssegmente so zusammengesetzt werden, dass die benachbarten Packungssegmente aufeinander treffen, um die flexiblen Teile der ringförmigen Packung an den Endabschnitten zusammenzudrücken.

11. Dichtung nach einem der Ansprüche 8 bis 10, wobei die Packungssegmente im Packungshalter so zusammengesetzt werden, dass sich bei einer Betrachtung der Dichtung aus axialer Richtung eine entsprechende keilförmige Lücke zwischen den sich zugewandten Enden von jedem Paar der sich benachbarten Packungssegmente im Radius der Endabschnitte bildet.

12. Dichtung nach einem der Ansprüche 8 bis 11, wobei die Packungssegmente und/oder der Packungshalter über Winkelstellungformen verfügen, die die Winkelpositionen der Packungssegmente im Packungshalter bestimmen.

13. Dichtung nach einem der Ansprüche 8 bis 12, wobei die Dichtung eine Blattdichtung ist, die flexiblen Teile gestapelte Blätter (51) der Blattdichtung sind und die Endabschnitte Endkanten (54) der Blätter darstellen.

14. Dichtung nach einem der Ansprüche 8 bis 12, wobei die Dichtung eine Bürstendichtung ist, die flexiblen Teile Borsten (151) der Bürstendichtung sind und die Endabschnitte die Endspitzen (154) der Borsten darstellen.

15. Bogenabschnitt nach einem der Ansprüche 8 bis 14, wobei der Bogenabschnitt aus einer Teilmenge der Packungssegmente der Dichtung besteht und so angepasst ist, dass es sich mit den anderen Bogenabschnitten verbindet, um die Dichtung zu formen.

## Revendications

1. Une méthode de constitution d'un joint d'étanchéité permettant d'assurer l'étanchéité entre deux composants coaxiaux en rotation relative, le joint d'étanchéité comprenant un module annulaire d'éléments flexibles allongés (51, 151), ce module pouvant être monté sur un premier des composants aux parties à la base (52, 152) des éléments flexibles et s'étendant vers l'autre composant de sorte que des extrémités (54, 154) des éléments flexibles se présentent de façon à entrer en contact avec l'autre composant, en le raclant, cette méthode comprenant
(i) la formation d'une série de segments de module (50, 150) dans laquelle chaque segment contient un sous-ensemble correspondant des éléments flexibles du module annulaire, et dans laquelle les parties terminales des éléments flexibles de chaque sous-ensemble, vues dans la direction axiale du joint d'étanchéité, sont disposés en ligne droite ; et
(ii) l'assemblage des segments de module dans un porte-module substantiellement circulaire de sorte que chaque segment de module forme un secteur angulaire correspondant du module annulaire.

2. Une méthode de formation d'un segment courbe d'un joint d'étanchéité permettant d'assurer l'étanchéité entre deux composants coaxiaux en rotation relative, le joint d'étanchéité possédant un module annulaire d'éléments flexibles allongés (51, 151), le module pouvant être monté sur un premier des composants aux parties à la base (52, 152) des éléments flexibles et s'étendant vers l'autre composant de sorte que des extrémités (54, 154) des éléments flexibles se présentent de façon à entrer en contact avec l'autre composant, en le raclant, cette méthode comprenant
(i) la formation d'une série de segments de module (50, 150) dans laquelle chaque segment contient un sous-ensemble correspondant des éléments flexibles empilés du module annulaire, et dans laquelle les parties terminales des éléments flexibles de chaque sous-ensemble, vues dans la direction axiale du joint d'étanchéité, sont disposés en ligne droite ; et
(ii) l'assemblage des segments de module dans un segment courbe d'un porte-module substantiellement circulaire de sorte que chaque segment de module forme un secteur angulaire correspondant du module angulaire.

3. Une méthode selon la revendication 1 ou 2, dans laquelle les segments de module sont assemblés de sorte que les segments de module avoisinants empiètent l'un sur l'autre en comprimant ensemble les éléments flexibles du module annulaire sur leurs extrémités.

4. Une méthode selon une quelconque des revendications précédentes, dans laquelle les segments de module sont assemblés de sorte que lorsqu'on les regarde dans la direction axiale du joint d'étanchéité, un écart correspondant en forme de coin se forme entre les extrémités opposées de chaque paire de segments de module voisins au rayon des parties de base.

5. Une méthode selon une quelconque des revendications précédentes, comprenant également l'opération consistant à :
enlever de la matière sur les extrémités des éléments flexibles empilés de chaque segment de module, de sorte que les extrémités des segments assemblés, vus dans la direction axiale du joint d'étanchéité, se situent sur un cercle.

6. Une méthode selon une quelconque des revendications précédentes, où le joint d'étanchéité est un joint à lames, les éléments flexibles étant des lames empilées (51) du joint à lames, et les extrémités étant des bords d'extrémité (54) des lames.

7. Une méthode selon une quelconque des revendications 1 à 5, dans laquelle le joint d'étanchéité est un joint à brosse, les éléments flexibles étant des crins (151) du joint à brosse, et les extrémités étant des bouts (154) des crins.

8. Un joint d'étanchéité permettant d'assurer l'étanchéité entre deux composants coaxiaux en rotation relative, le joint d'étanchéité possédant un module annulaire d'éléments flexibles allongés (51, 151), le module pouvant être monté sur un premier des composants aux parties à la base (52, 152) des éléments flexibles, et s'étendant vers l'autre composant de sorte que des extrémités (54, 154) des éléments flexibles se présentent de façon à entrer en contact avec l'autre composant, en le raclant ;
dans lequel le joint d'étanchéité possède en outre un porte-module substantiellement circulaire, et le module annulaire d'éléments flexibles étant constitué par une série de segments de module (50, 150), chaque segment contenant un sous-ensemble correspondant des éléments flexibles empilés du module annulaire, et les segments étant assemblés dans le porte-module de sorte que chaque segment de module forme un secteur angulaire correspondant du module annulaire, **caractérisé par le fait que** lorsqu'elles sont vues dans le sens axial du joint d'étanchéité, les parties de base des éléments flexibles de chaque sous-ensemble sont disposés sur une ligne droite.

9. Un joint à lames selon la revendication 8, dans lequel les segments de module sont assemblés dans le porte-module de sorte que des segments de modules avoisinants empiètent l'un sur l'autre en comprimant ensemble les éléments flexibles du module annulaire sur leurs extrémités.

10. Un joint pour la réalisation de l'étanchéité entre deux composants coaxiaux en rotation relative, le joint d'étanchéité possédant un module annulaire d'éléments flexibles allongés (51, 151), le module pouvant être monté sur un premier des composants aux parties à la base (52, 152) des éléments flexibles et s'étendant vers l'autre composant de sorte que des extrémités (54, 154) des éléments flexibles se présentent pour entrer en contact avec l'autre composant, en le raclant ;
dans lequel le joint d'étanchéité possède un porte-module de forme substantiellement circulaire, et le module annulaire d'éléments flexibles empilés est formé par une série de segments de module (56, 156), chaque segment contenant un sous-ensemble correspondant des éléments flexibles empilés du module annulaire, et les segments étant assemblés dans le porte-module de sorte que chaque segment de module constitue un secteur angulaire respectif du module annulaire ; **caractérisé par le fait que** lorsqu'on la regarde dans la direction axiale du joint d'étanchéité, l'extrémité des éléments flexibles empilés de chaque sous-ensemble se trouve sur une ligne droite ; et
où lesdits segments de module sont assemblés dans le porte-module de sorte que des segments de module avoisinants empiètent l'un sur l'autre en comprimant ensemble les éléments flexibles du module annulaire sur leurs extrémités.

11. Un joint d'étanchéité selon une quelconque des revendications 8 à 10, dans lequel les segments de module sont assemblés dans le porte-module de sorte que lorsqu'on les regarde dans la direction axiale du joint d'étanchéité, un écart correspondant en forme de coin se forme entre les extrémités opposées de chaque paire de segments de module voisins au rayon des parties de base.

12. Un joint d'étanchéité selon une quelconque des revendications 8 à 11, dans lequel les segments de module et/ou le porte-module présentent des formations de réglage d'angle déterminant les positions angulaires des segments de module dans le porte-module.

13. Un joint d'étanchéité selon une quelconque des revendications 8 à 12, dans lequel le joint d'étanchéité est un joint à lames, les éléments flexibles étant des lames empilées (51) du joint à lames, et les extrémités étant des bords d'extrémité (54) des lames.

14. Une méthode selon une quelconque des revendications 8 à 12, dans laquelle le joint est un joint à brosse, les éléments flexibles étant des crins (151) du joint à brosse, et les extrémités étant des bouts (154) des crins.

15. Une section en arc d'un joint selon une quelconque des revendications 8 à 14, la section en arc portant un sous-ensemble des segments de module d'étanchéité du joint d'étanchéité et étant adaptée pour se joindre à d'autres sections en arc en constituant le joint d'étanchéité.
